# EUROPEAN PATENT APPLICATION

(11) **EP 3 402 156 A1**
(43) Date of publication of application: **14.11.2018**
(21) Application number: 18171189.6
(22) Date of filing: 08.05.2018
(51) Int. Cl.: H04L 29/06, H04L 9/32, H04W 12/06

(54) **METHOD OF LOGIN CONTROL**

(30) Priority: 10.05.2017 TW 106115412
(71) Applicant: Chou, Hung-Chien, 40877 Taichung City (TW)
(72) Inventor: Chou, Hung-Chien, 40877 Taichung City (TW)
(74) Representative: Hoffmann Eitle

(57) **Abstract**

A method of login control is to be implemented by an authentication server terminal (11). The method includes steps of: after receiving a request for connection from a vendor server terminal (12), generating, storing, and transmitting a reference server identifier to the vendor server terminal (12); after receiving from a user terminal (13) an encrypted server identifier that results from an encryption performed on the reference server identifier, determining whether a combination of a user-end serial number and the encrypted server identifier is authorized; and when a result of the determination is positive, transmitting a confirmation of authorization and an entry of user data to the vendor server terminal (12) .

## Description

The disclosure relates to access control, and more particularly to a method of login control.

A conventional method of login control, such as Single Sign On (SSO) in the OpenID standard, utilizes an Identity Provider (IdP) to store plural entries of user data, each of which may be a set of a User Identification (User ID), a User Password (User PW) or statements that are related to personal information. A user is able to log into his/her account of a website by providing to the website a Uniform Resource Identifier (URI) that is issued by the IdP and that contains his/her User ID registered on the IdP. Thereafter, the website can verify the identity of the user through requesting the IdP for a corresponding one of the entries of user data based on the URI provided by the user. Consequently, the user can conveniently access any website that supports OpenID by using the same URI. For example, a user who registered "Alice" as her User ID on an IdP with a Uniform Resource Locator (URL) of http://openid-provider.org will be able to log in any website that supports OpenID by using the URI, http://alice.openid-provider.org. Since the authentication mechanism currently used by the IdPs is insufficient, the IdPs may be vulnerable to data theft, so websites supporting OpenId may have deficiency in login control.

Therefore, an object of the disclosure is to provide a method of login control that can alleviate at least one of the drawbacks of the prior art.

According to the disclosure, the method is to be implemented by a system. The system includes an authentication server terminal, a vendor server terminal and a user terminal that are communicable with each other through a first communication network. The method includes steps of:
a) by the authentication server terminal after receiving a request for connection from the vendor server terminal through the first communication network, generating a reference server identifier, storing the reference server identifier in the authentication server terminal, and transmitting the reference server identifier through the first communication network to the vendor server terminal so as to enable the vendor server terminal to transmit the reference server identifier through the first communication network to the user terminal;
b) by the authentication server terminal after receiving, through the first communication network from the user terminal, an encrypted server identifier which results from encryption performed on the reference server identifier by the user terminal based on a prestored transform key, a user-end serial number corresponding to the user terminal, and an entry of user data, determining whether a combination of the encrypted server identifier and the user-end serial number is authorized; and
c) transmitting, by the authentication server terminal when it is determined that the combination of the encrypted server identifier and the user-end serial number is authorized, a confirmation of authorization and the entry of user data to the vendor server terminal through the first communication network.

Other features and advantages of the disclosure will become apparent in the following detailed description of the embodiment with reference to the accompanying drawings, of which:
Figure 1 is a block diagram illustrating an embodiment of a system utilized to implement a method of login control according to the disclosure;
Figure 2 is a flow chart illustrating an embodiment of a registration procedure of the method of login control according to the disclosure;
Figure 3 is a flow chart illustrating an embodiment of a login procedure of the method of login control according to the disclosure; and
Figure 4 is a flow chart illustrating an embodiment of sub-steps for step 38 included in the login procedure of the method of login control according to the disclosure.

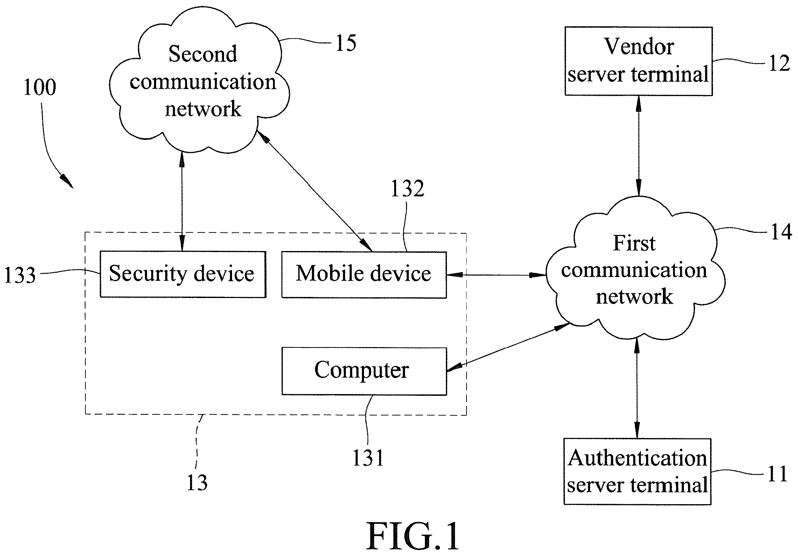

Referring to Figure 1, an embodiment of a system 100 utilized to implement a method of login control according to this disclosure is illustrated. The system 100 includes an authentication server terminal 11, a vendor server terminal 12 and a user terminal 13 that are communicable with each other through a first communication network 14. In this embodiment, the authentication server terminal 11 is implemented to be a server that performs authentication, and the vendor server terminal 12 is implanted to be a web server, but implementations of these terminals are not limited to what are disclosed herein and may vary in other embodiments. In this embodiment, the first communication network 14 is the Internet, but implementation of the first communication network 14 may vary in other embodiments and is not limited to what is disclosed herein.

The authentication server terminal 11 stores a plurality of reference preliminary keys, a set of reference serial numbers, and a plurality of verification keys that correspond respectively to the reference serial numbers. The set of reference serial numbers and the plurality of verification keys are generated due to registration activities by former users with respect to the authentication server terminal 11.

The user terminal 13 stores a user-end preliminary key. Specifically speaking, the user terminal 13 includes a computer 131, a mobile device 132 and a security device 133. In one embodiment, the user terminal 13 may/does not include the computer 131.

The computer 131 is communicable with the vendor server terminal 12 through the first communication network 14. The computer 131 may be implemented to be a laptop computer, a notebook computer or a tablet computer, but implementation thereof is not limited to what are disclosed herein and may vary in other embodiments.

The mobile device 132 is communicable with the authentication server terminal 11 and the vendor server terminal 12 through the first communication network 14, and is further communicable with the security device 133 through a second communication network 15. The mobile device 132 may be implemented to be a smartphone, a smartwatch or a personal digital assistant (PDA), but implementation thereof is not limited to what are disclosed herein and may vary in other embodiments. In this embodiment, the second communication network 15 is different from the first communication network 14, and is a short-range wireless communication network, such as Bluetooth or Wi-Fi, but implementation of the second communication network 15 may vary in other embodiments and is not limited to what are disclosed herein.

The security device 133 stores the user-end preliminary key, an entry of user data, and a user-end serial number that corresponds to the security device 133. The security device 133 further stores a transform key after a registration procedure that will be explained hereinbelow. In one embodiment, the entry of user data may be implemented to be statements that are related to personal information, but implementation thereof is not limited to the disclosure herein and may vary in other embodiments. In one embodiment, the security device 133 may be implemented to include a processor, a memory and a transceiver, or may be a System on Chip (SoC) which provides functions of storage and computation, but implementation thereof is not limited to what are disclosed herein and may vary in other embodiments.

The method of login control includes the registration procedure and a login procedure.

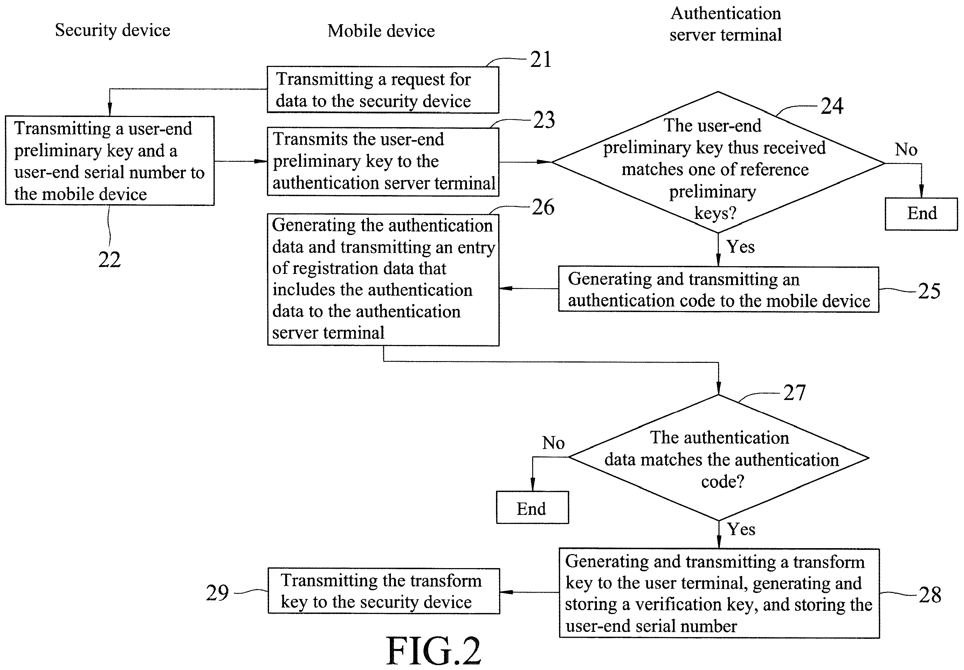

Referring to Figures 1 and 2, the registration procedure of the method includes steps 21 to 29 as follows.

In step 21, the mobile device 132 transmits a request for data through the second communication network 15 to the security device 133.

In step 22, in response to receipt of the request for data from the mobile device 132, the security device 133 transmits the user-end preliminary key and the user-end serial number through the second communication network 15 to the mobile device 132.

In step 23, the mobile device 132 transmits the user-end preliminary key through the first communication network 14 to the authentication server terminal 11.

In step 24, when in receipt of the user-end preliminary key through the first communication network 14 from the user terminal 13, the authentication server terminal 11 determines whether the user-end preliminary key thus received matches one of the reference preliminary keys. When it is determined that the user-end preliminary key thus received does not match any one of the reference preliminary keys, the flow of the registration procedure terminates. Otherwise, the flow of the registration procedure proceeds to step 25.

When it is determined that the user-end preliminary key thus received matches one of the reference preliminary keys, in step 25, the authentication server terminal 11 generates an authentication code and transmits the authentication code to the mobile device 132 of the user terminal 13 in an attempt to enable the mobile device 132 of the user terminal 13 to transmit an entry of registration data through the first communication network 14 to the authentication server terminal 11. The entry of registration data includes the user-end preliminary key, the user-end serial number, and authentication data associated with the authentication code.

In step 26, when in receipt of the authentication code through the first communication network 14, the mobile device 132 generates the authentication data based on the authentication code, and transmits the entry of registration data through the first communication network 14 to the authentication server terminal 11. In one embodiment, the authentication data is implemented to be data that includes the authentication code, but implementation of the authentication data may vary in other embodiments and is not limited to what is disclosed herein. For example, after a user registered an account at a website with his/her email, the website transmits an authentication code to the user via the email provided by the user in an attempt to authenticate the user' s identity which is associated with the email . As long as the user replies the website with authentication data, which contains the authentication code received via the email, the user's identity can be authenticated.

In step 27, the authentication server terminal 11 determines, based on the authentication data included in the entry of registration data, whether the authentication data matches the authentication code. When it is determined that the authentication data does not match the authentication code, the flow of the registration procedure terminates. Otherwise, the flow of the registration procedure proceeds to step 28.

In step 28, when it is determined that the authentication data matches the authentication code, the authentication server terminal 11 generates the transform key based on the user-end preliminary key included in the entry of registration data, and transmits the transform key through the first communication network 14 to the user terminal 13. Also, the authentication server terminal 11 generates, based on the transform key, a verification key that corresponds to the transform key and to the user-end serial number included in the entry of registration data, and stores the verification key in the authentication server terminal 11. Moreover, the authentication server terminal 11 stores the user-end serial number included in the entry of registration data into the set of reference serial numbers in the authentication server terminal 11 to serve as an additional one of the reference serial numbers. It should be noted that the user-end serial number thus stored is different from others of the reference serial numbers previously stored in the authentication server terminal 11. It is worth to note that in this embodiment, the transform key is the same as the verification key so as to be utilized in a symmetric encryption/decryption algorithm. However, implementations of the transform key and the verification key are not limited to what are disclosed herein and may vary in other embodiments. For example, in an asymmetric encryption/decryption algorithm such as the public-key cryptography, the transform key is implemented to be a private key, and the verification key is implemented to be a public key which corresponds to but is different from the private key.

In step 29, the mobile device 132 receives the transform key through the first communication network 14, and transmits the transform key through the second communication network 15 to the security device 133.

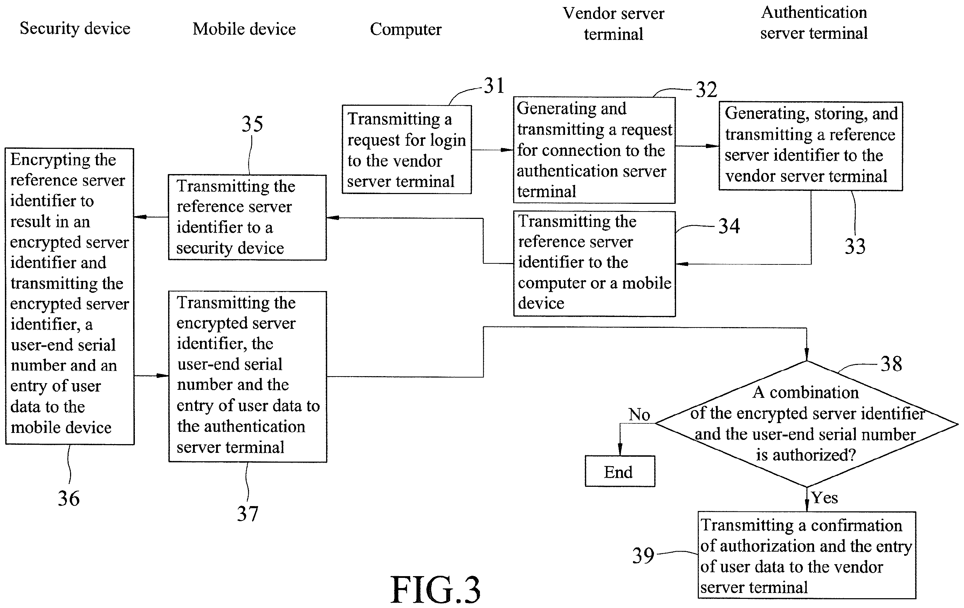

Referring to Figures 1 and 3, the login procedure of the method includes steps 31 to 39 as follows.

In step 31, the computer 131 transmits a request for login through the first communication network 14 to the vendor server terminal 12. It should be noted that in one embodiment where the computer 131 is not included in the user terminal 12, the mobile device 132 transmits the request for login through the first communication network 14 directly to the vendor server terminal 12.

In step 32, the vendor server terminal 12 generates the request for connection based on the request for login received from one of the computer 131 and the mobile device 132, and transmits the request for connection through the first communication network 14 to the authentication server terminal 11.

In step 33, after receiving the request for connection from the vendor server terminal 12 through the first communication network 14, the authentication server terminal 11 generates a reference server identifier, stores the reference server identifier in the authentication server terminal 11, and transmits the reference server identifier through the first communication network 14 to the vendor server terminal 12 so as to enable the vendor server terminal 12 to transmit the reference server identifier through the first communication network 14 to the user terminal 13. In this embodiment, the reference server identifier is formatted as a Quick Response code (QR code), but implementation of the reference server identifier may vary in other embodiments and is not limited to what is disclosed herein.

In step 34, the vendor server terminal 12 transmits the reference server identifier through the first communication network 14 to said one of the computer 131 and the mobile device 132 of the user terminal 13.

In step 35, after obtaining the reference server identifier from the computer 131 or directly from the vendor server terminal 12, the mobile device 132 transmits the reference server identifier through the second communication network 15 to the security device 133 in an attempt to enable the security device 133 to perform encryption on the reference server identifier to result in an encrypted server identifier. It is worth noting that in this embodiment, the mobile device 132 obtains the reference server identifier by means of scanning the QR code displayed on a display of the computer 131. In one embodiment where the computer 131 is not included in the user terminal 13, the mobile device 132 obtains the reference server identifier directly from the vendor service terminal 12 through the first communication network 14, and transmits the reference server identifier to the security device 133 through the second communication network 15.

In step 36, the security device 133 performs the encryption on the reference server identifier based on the transform key to result in the encrypted server identifier. The security device 133 then transmits the encrypted server identifier, the user-end serial number and the entry of user data through the second communication network 15 to the mobile device 132. It should be noted that in one embodiment, the security device 133 performs the encryption on the reference server identifier further based on a user input that is generated according to operations of a user on the security device 133. For example, the mobile device 132 may display a message to notify the user to operate a hardware button on the security device 133 so as to allow the login procedure to proceed. The security device 133 is configured to encrypt the reference server identifier and transmit the encrypted server identifier, the user-end serial number and the entry of user data to the mobile device 132 only when the security device 133 detects that the hardware button is operated.

In step 37, the mobile device 132 transmits the encrypted server identifier, the user-end serial number and the entry of user data through the first communication network 14 to the authentication server terminal 11.

In step 38, after receiving, through the first communication network 14 from the user terminal 13, the encrypted server identifier, the user-end serial number corresponding to the security device 133 of the user terminal 13, and the entry of user data, the authentication server terminal 11 determines whether a combination of the encrypted server identifier and the user-end serial number is authorized. When it is determined that the combination of the encrypted server identifier and the user-end serial number is not authorized, the flow of the login procedure terminates. Otherwise, the flow of the login procedure proceeds to step 39.

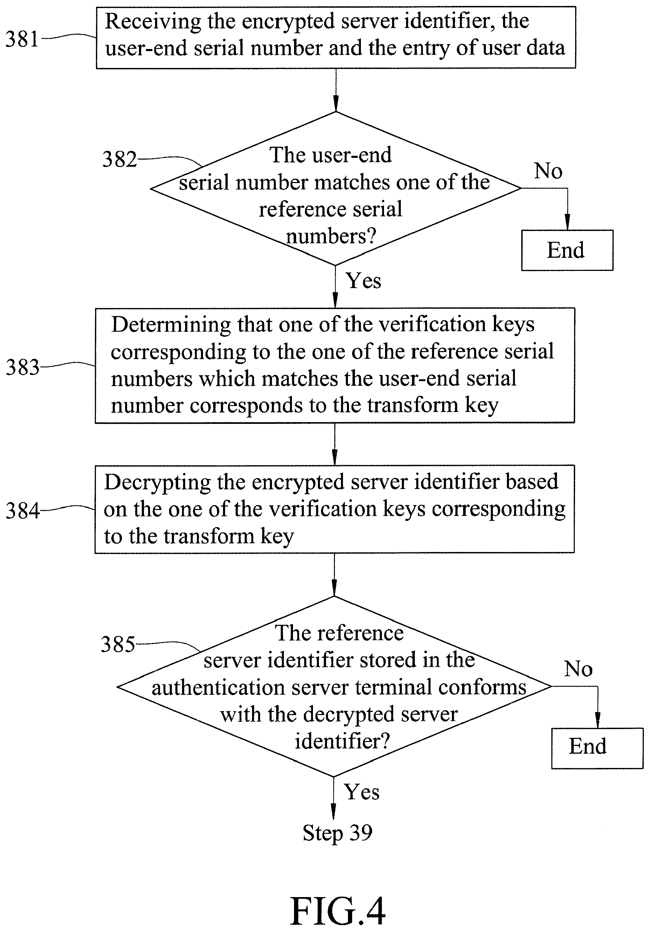

Specifically speaking, as illustrated in Figure 4, step 38 further includes sub-steps 381 to 385 described as follows.

In sub-step 381, the authentication server terminal 11 receives the encrypted server identifier, the user-end serial number and the entry of user data through the first communication network 14.

In sub-step 382, after receiving the encrypted server identifier, the user-end serial number and the entry of user data, the authentication server terminal 11 determines whether the user-end serial number matches one of the reference serial numbers . When it is determined that the user-end serial number does not match any one of the reference serial numbers, the flow of the login procedure terminates. Otherwise, the flow of the login procedure proceeds to sub-step 383.

In sub-step 383, when it is determined that the user-end serial number matches one of the reference serial numbers, the authentication server terminal 11 determines that one of the verification keys corresponding to the one of the reference serial numbers which matches the user-end serial number corresponds to the transform key. It should be noted that in order to decrypt what is encrypted by a specific transform key, a specific verification key corresponding to the specific transform key is required.

In sub-step 384, the authentication server terminal 11 decrypts, based on the one of the verification keys corresponding to the transform key, the encrypted server identifier so as to generate a decrypted server identifier.

In sub-step 385, the authentication server terminal 11 determines whether the reference server identifier stored in the authentication server terminal 11 conforms with the decrypted server identifier. When it is determined that the reference server identity stored in the authentication server terminal 11 conforms with the decrypted server identity, the authentication server terminal 11 determines that the combination of the encrypted server identity and the asserted serial number is authorized and the flow of the login procedure proceeds to step 39. On the other hand, the flow of the login procedure goes to an end.

In step 39, the authentication server terminal 11 transmits, when it is determined that the combination of the encrypted server identifier and the user-end serial number is authorized, a confirmation of authorization and the entry of user data to the vendor server terminal 12 through the first communication network 14. The vendor server terminal 12 accepts the request for login based on the confirmation of authorization, and automatically allows the user to login in accordance with the entry of user data received from the authentication server terminal 11.

In summary, the method of login control according to the disclosure utilizes the security device 133 to perform the encryption on the reference server identifier based on the transform key to result in the encrypted server identifier, and the authentication sever terminal 11 determines whether the combination of the encrypted server identifier and the user-end serial number is authorized. When the determination is positive, the authentication server terminal 11 transmits the confirmation of authorization and the entry of user data to the vendor server terminal 12 so as to enable the vendor server terminal 12 to accept the request for login. Therefore, under a condition that no private user data is stored in the authentication server terminal 11, a user can log in any vendor server terminal that cooperates with the authentication server terminal 11 to realize the method of login control according to the disclosure by utilizing the transform key and the user-end serial number. Data security and protection of users' privacies are enhanced.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method of login control, to be implemented by a system including an authentication server terminal (11), a vendor server terminal (12) and a user terminal (13) that are communicable with each other through a first communication network (14), the method **characterized by** steps of:
a) by the authentication server terminal (11) after receiving a request for connection from the vendor server terminal (12) through the first communication network (14), generating a reference server identifier, storing the reference server identifier in the authentication server terminal (11), and transmitting the reference server identifier through the first communication network (14) to the vendor server terminal (12) so as to enable the vendor server terminal (12) to transmit the reference server identifier through the first communication network (14) to the user terminal (13);
b) by the authentication server terminal (11) after receiving, through the first communication network (14) from the user terminal (13), an encrypted server identifier which results from encryption performed on the reference server identifier by the user terminal (13) based on a prestored transform key, a user-end serial number corresponding to the user terminal (13), and an entry of user data, determining whether a combination of the encrypted server identifier and the user-end serial number is authorized; and
c) transmitting, by the authentication server terminal (11) when it is determined that the combination of the encrypted server identifier and the user-end serial number is authorized, a confirmation of authorization and the entry of user data to the vendor server terminal (12) through the first communication network (14).

2. The method as claimed in claim 1, the user terminal (13) including a security device (133) that stores the transform key, and a mobile device (132) that is communicable with the vendor server terminal (12) through the first communication network (14) and that is communicable with the security device (133) through a second communication network (15), **characterized in that** step a) includes:
generating, by the vendor server terminal (12), the request for connection based on a request for login received from the mobile device (132);
transmitting, by the vendor server terminal (12), the request for connection to the authentication server terminal (11);
transmitting, by the vendor server terminal (12), the reference server identifier through the first communication network (14) to the mobile device (132); and
transmitting, by the mobile device (132), the reference server identifier through the second communication network (15) to the security device (133) so as to enable the security device (133) to perform the encryption on the reference server identifier based on the transform key to result in the encrypted server identifier.

3. The method as claimed in claim 2, the mobile device (132) further communicable with the authentication server terminal (11) through the first communication network (14), the security device (133) further storing the entry of user data and the user-end serial number that corresponds to the security device (133), **characterized in that** step b) further includes:
transmitting, by the security device (133), the encrypted server identifier, the user-end serial number and the entry of user data through the second communication network (15) to the mobile device (132); and
transmitting, by the mobile device (132), the encrypted server identifier, the user-end serial number and the entry of user data through the first communication network (14) to the authentication server terminal (11).

4. The method as claimed in any one of claims 2 and 3, **characterized in that** the first communication network (14) is the Internet, and the second communication network (15) is a short-range wireless communication network.

5. The method as claimed in any one of claims 1 to 4, the user terminal (13) including a computer (131) that is communicable with the vendor server terminal (12) through the first communication network (14), a security device (133) that stores the transform key, and a mobile device (132) that is communicable with the vendor server terminal (12) through the first communication network (14) and that is communicable with the security device (133) through a second communication network (15), **characterized in that** step a) includes:
generating, by the vendor server terminal (12), the request for connection based on a request for login received from the computer (131);
transmitting, by the vendor server terminal (12), the request for connection to the authentication server terminal (11);
transmitting, by the vendor server terminal (12), the reference server identifier through the first communication network (14) to the computer (131); and
transmitting, by the mobile device (132) after obtaining the reference server identifier from the computer (131), the reference server identifier through the second communication network (15) to the security device (133) so as to enable the security device (133) to perform the encryption on the server identifier based on the transform key to result in the encrypted server identifier.

6. The method as claimed in claim 5, the mobile device (132) further communicable with the authentication server terminal (11) through the first communication network (14), the security device (133) further storing the entry of user data and the user-end serial number that corresponds to the security device (133), **characterized in that** step b) further includes:
transmitting, by the security device (133), the encrypted server identifier, the user-end serial number and the entry of user data through the second communication network (15) to the mobile device (132); and
transmitting, by the mobile device (132), the encrypted server identifier, the user-end serial number and the entry of user data through the first communication network (14) to the authentication server terminal (11) .

7. The method as claimed in any one of claims 5 and 6, **characterized in that** the first communication network (14) is the Internet, and the second communication network (15) is a short-range wireless communication network.

8. The method as claimed in any one of claims 1 to 7, the authentication server terminal (11) storing a set of reference serial numbers and a plurality of verification keys that correspond respectively to the reference serial numbers, **characterized in that** step b) includes sub-steps of:
b-1) receiving, by the authentication server terminal (11) through the first communication network (14), the encrypted server identifier, the user-end serial number and the entry of user data;
b-2) determining, by the authentication server terminal (11) after receiving the encrypted server identifier, the user-end serial number and the entry of user data, whether the user-end serial number matches one of the reference serial numbers;
b-3) determining, by the authentication server terminal (11) when it is determined that the user-end serial number matches one of the reference serial numbers, that one of the verification keys corresponding to the one of the reference serial numbers which matches the user-end serial number corresponds to the transform key;
b-4) decrypting, by the authentication server terminal (11) based on the one of the verification keys corresponding to the transform key, the encrypted server identifier so as to generate a decrypted server identifier;
b-5) determining, by the authentication server terminal (11), whether the reference server identifier stored in the authentication server terminal (11) conforms with the decrypted server identifier; and
b-6) determining, by the authentication server terminal (11) when it is determined that the reference server identity stored in the authentication server terminal (11) conforms with the decrypted server identity, that the combination of the encrypted server identity and the asserted serial number is authorized.

9. The method as claimed in any one of claims 1 to 8, the authentication server terminal (11) storing a plurality of reference preliminary keys, the user terminal (13) storing a user-end preliminary key, the method further **characterized by**, prior to step a), steps of :
d) determining, by the authentication server terminal (11) when receiving the user-end preliminary key through the first communication network (14) from the user terminal (13), whether the user-end preliminary key thus received matches one of the reference preliminary keys;
e) by the authentication server terminal (11) when it is determined that the user-end preliminary key thus received matches one of the reference preliminary keys, generating an authentication code and transmitting the authentication code to the user terminal (13) so as to enable the user terminal (13) to transmit, through the first communication network (14) to the authentication server terminal (11), an entry of registration data that includes the user-end preliminary key, the user-end serial number, and authentication data associated with the authentication code;
f) determining, by the authentication server terminal (11) based on the authentication data included in the entry of registration data, whether the authentication data matches the authentication code; and
g) by the authentication server terminal (11) when it is determined that the authentication data matches the authentication code, generating the transform key based on the user-end preliminary key included in the entry of registration data, transmitting the transform key through the first communication network (14) to the user terminal (13), generating, based on the transform key, a verification key that corresponds to the transform key and to the user-end serial number included in the entry of registration data, storing the verification key in the authentication server terminal (11), and storing the user-end serial number included in the entry of registration data into the set of reference serial numbers in the authentication server terminal (11) to serve as an additional one of the reference serial numbers.

10. The method as claimed in claim 9, the user terminal (13) including a security device (133) that stores the user-end preliminary key and the user-end serial number, and a mobile device (132) that is communicable with the vendor server terminal (12) through the first communication network (14) and that is communicable with the security device (133) through a second communication network (15), **characterized in that**:
step d) further includes transmitting, by the security device (133) in response to receipt of a request for data from the mobile device (132), the user-end preliminary key and the user-end serial number through the second communication network (15) to the mobile device (132), and transmitting, by the mobile device (132), the user-end preliminary key through the first communication network (14) to the authentication server terminal (11);
step e) further includes, by the mobile device (132) when in receipt of the authentication code through the first communication network (14), generating the authentication data based on the authentication code and transmitting the entry of registration data through the first communication network (14) to the authentication server terminal (11); and
step g) further includes, by the mobile device (132), receiving the transform key through the first communication network (14) and transmitting the transform key through the second communication network (15) to the security device (133).

11. The method as claimed in any one of claims 9 and 10, **characterized in that** the first communication network (14) is the Internet, and the second communication network (15) is a short-range wireless communication network.

12. The method as claimed in any one of claims 1 to 11, **characterized in that** the reference server identifier is formatted as a Quick Response code, QR code.
